(19) Europäisches Patentamt

European Patent Office

Office européen des brevets

(11) **EP 1 253 334 A1**

(12) **EUROPEAN PATENT APPLICATION**

(43) Date of publication:
**30.10.2002 Bulletin 2002/44**

(51) Int Cl.$^7$: **F16B 33/06**

(21) Application number: **02009450.4**

(22) Date of filing: **25.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.04.2001 JP 2001127877**

(71) Applicant: **AOYAMA SEISAKUSHO CO., LTD.**
**Nagoya-shi, Aichi-ken (JP)**

(72) Inventors:
 • **Hamada, Masahiko, c/o Ohguchi Plant**
  **Ohguchi-cho, Niwa-gun, Aichi (JP)**
 • **Ogou, Michiaki, c/o Ohguchi Plant**
  **Ohguchi-cho, Niwa-gun, Aichi (JP)**

(74) Representative: **Betten & Resch**
 **Patentanwälte,**
 **Theatinerstrasse 8**
 **80333 München (DE)**

(54) **Threaded fastener and method of clamping using the same**

(57)    A threaded fastened, in which a friction coefficient of a threaded face is made smaller than that of a bearing surface to enable increasing a critical axial force $F_y$ and also a critical clamping force $T_y$, and a method of clamping members by means of the threaded fastener are provided.

**Fig. 1**

**Description**

Field of the invention

The invention relates to a threaded fastener capable of clamping parts being clamped with a critical axial force larger than that in the prior art.

Background of the Invention

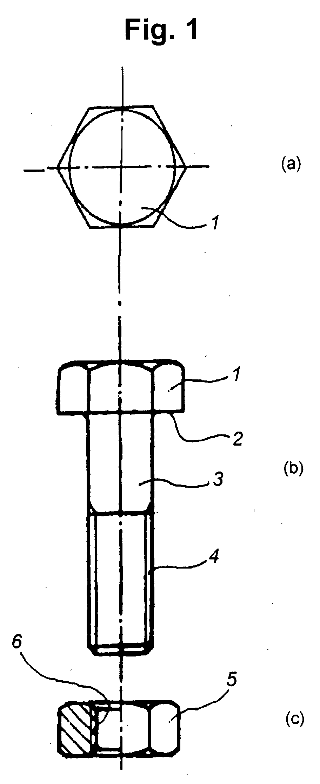

Fig. 1 shows a typical example of threaded fastener such as bolt, tapping screw or the like. A bearing surface 2 is formed on a back side of a screw head 1 to abut against a part being clamped. Further, a shank 3 provided to extend centrally of the back side of the screw head 1 is formed with a thread face 4, which is composed of external threads. When parts being clamped are to be clamped with such screw parts, the thread face 4 is screwed in a tapped hole provided in an object, to which parts being clamped are mounted. Then screwing of parts being clamped is carried out until the bearing surface 2 abuts against a surface of the parts being clamped. Alternatively, a shank 3 is inserted into a bolt insertion hole extending through the parts being clamped and a bolt insertion hole extending through the object, to which the parts being clamped are mounted, so that the thread face 4 is caused to project on the opposite side of the object. Then a nut 5 formed with a thread face 6 composed of internal threads is screwed onto the thread face 4 projected on the opposite side. Further, the nut 5 is screwed so that the parts being clamped and the object are pinched and fastened by the bearing surface 2 and the nut 5 to be clamped.
An axial force applied to threaded fastener must be stabilized as high as possible in clamping of such parts and members. That is, when the axial force is too small, threaded fastener is liable to be loosened. On the other hand, when the axial force is too large and exceeds a critical axial force, threaded fastener yield to be elongated or broken.
In the case where there is a need of clamping a multiplicity of parts as in assembly of automobiles, it is common practice in actual clamping operation to control an axial force with a clamping torque. Such controling an axial force makes use of the relationship between a clamping torque and an axial force, as indicated by the following formulae.
When a bolt has been clamped, torque $T_s$ (hereinafter referred to as a thread face torque) acting on a thread face 4 of a bolt and torque $T_w$ (hereinafter referred to as a bearing surface torque) acting on a bearing surface 2 of a bolt are represented by a formula (1) and a formula (2), respectively. Here, $d_2$ is a screw pitch diameter, $d_w$ a bearing surface equivalent diameter, $\mu_s$ a thread face friction coefficient, $\mu_w$ a bearing surface friction coefficient, $\alpha$ a screw thread half angle, P a screw pitch, and F an axial force.

$$T_s = (d_2 F/2) \{\mu_s/\cos \alpha\} + (P/\pi d_2)\}$$  (1)

$$T_w = F d_w \mu_w /2$$  (2)

A clamping torque T required for clamping a screw is sum of $T_s$ and $T_w$($T = T_s + T_w$). The clamping torque T is obtained as a formula (3) from the formula (1) and the formula (2).

$$T = (F/2) \{(\mu_s/\cos \alpha)d_2 + (P/\pi) + d_w \mu_w \}$$  (3)

Generally, a thread face friction coefficient $\mu_s$ and a bearing surface friction coefficient $\mu_w$ have the substantially same value. Assuming that such friction coefficient is respectively substituted by $\mu$, the formula (3) is represented by a formula (4). As indicated by the formula (4), the clamping torque T is determined by an axial force F and the friction coefficient $\mu$.

$$T = (F/2) \{(\mu/\cos \alpha)d_2 + (P/\pi) + d_w \mu\}$$  (4)

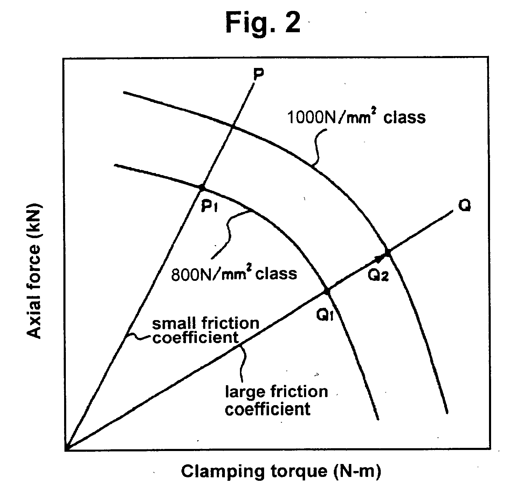

Fig. 2 shows an example of the relationship (hereinafter referred to as equivalent stress curve) among a clamping torque T and a friction coefficient $\mu$ of threaded fastener, axial force F and a yield critical curve.
In the case of a bolt of 800 N/mm$^2$ class, when a friction coefficient $\mu$ is large, the relationship between a clamping torque T and an axial force F is represented by a straight line Q having a relatively small gradient. When a clamping torque T is gradually increased to clamp a bolt to thereby increase an axial force F, the bolt yields at a point

$Q_1$ of intersection of the straight line Q and an equivalent stress curve of 800 N/mm² class. At the time of yielding, an axial force is hereinafter referred to as a critical axial force, and a clamping torque is hereinafter referred to as a critical clamping torque.

On the other hand, when a friction coefficient μ is small, the relationship between T and F is represented by a straight line P having a relatively large gradient. When a clamping torque T is gradually increased to clamp a bolt to thereby increase an axial force F, the bolt yields at a point $P_1$ of intersection of the straight line P and an equivalent stress curve of 800 N/mm² class.

In this manner, the critical clamping torque with a large friction coefficient μ can be made larger than the critical clamping torque with a small friction coefficient μ. However, the critical axial force with a large friction coefficient μ becomes smaller than the critical axial force with a small friction coefficient μ, so that strength of a bolt has not been made full use of.

As described above, the critical axial force with a small friction coefficient μ can be made larger than that with a large friction coefficient μ. However, the critical clamping torque with a small friction coefficient μ becomes smaller than that with a large friction coefficient μ. Therefore, a bolt is liable to loosen.

Also, in the case of a small friction coefficient μ, a bolt is liable to yield or to be broken when it is clamped with the same clamping torque as that allowable in cases where a friction coefficient μ is large.

The relationship among a clamping torque T, a friction coefficient μ and an axial force F is that described above at all times. Therefore, in order to enhance both a critical axial force and a critical clamping torque, it has been necessary to enhance the strength of a bolt itself or to increase a shank diameter of a bolt so that the point $Q_1$ is shifted to the point $Q_2$. However, either of the above methods has incurred an increase in cost.

Summary of the Invention

The present invention solves the above-mentioned problems and provides a threaded fastener hard to loosen and capable of adequately making use of the strength of a bolt through improvement of the relationship between a clamping torque and an axial force. Furthermore, the present invention may suppress an increase in cost in the case where the number of bolts required for clamping can be reduced.

In order to attain the above object, a threaded fastener according to the invention has a feature in that a friction coefficient on a thread face of the threaded fastener is made smaller than that on a bearing surface of the threaded fastener.

More specifically, the invention provides the following items.

(1) A threaded fastener comprising a bearing surface and a thread face, wherein a friction coefficient of the thread face is made smaller than that of the bearing surface.

(2) A method of clamping members by means of threaded fastener comprising a bearing surface and a thread face, wherein the member is clamped with the thread face having a smaller friction coefficient than that of the bearing surface.

According to the above invention (1) or (2), since a friction coefficient of the thread face is smaller than that of the bearing surface, the threaded fastener is hard to loosen and capable of adequately making use of the strength of a bolt and also suppressing an increase in cost.

The threaded fastener mentioned above is a member which has a thread or threads such as the bolt or the nut no matter where the thread or the threads are formed thereon.

Brief Description of the Drawings

Fig. 1 is a front view(a) and a plan view(b) of a hexagon headed bolt and a partially cross sectional view(c) of a front of a nut;

Fig. 2 is a graph illustrating the relationship between a clamping torque and an axial force when a friction coefficient varies;

Fig. 3 is a graph illustrating the relationship between a thread face torque and an axial force when a thread face friction coefficient varies;

Fig. 4 is a graph illustrating the relationship among a thread face torque, a bearing surface torque and an axial force.

Fig. 5 is a graph illustrating the relationship between a bearing surface torque and an axial force when a bearing surface friction coefficient varies; and

Fig. 6 is an equivalent stress curve showing a bolt according to an embodiment of the invention in comparison with a bolt of a comparative example.

Description of the Preferred Embodiments

A fundamental concept of the present invention will be described below in detail taking the case of a bolt shown in Fig. 1 as threaded fastener. However, the invention is not limited to a specific example shown below, but allows various kinds of embodiments.

An examination will be made of a critical axial force $F_y$, a critical thread face torque $T_{sy}$, and a critical bearing surface toque $T_{wy}$ of a bolt when a bearing surface friction coefficient $\mu_w$ is not varied but a thread face friction coefficient $\mu_s$ is made small in value.

First, a critical axial force $F_y$ of a bolt is given by a formula (5).

$$F_y \leq (\pi d_s{}^2 \sigma_y/4) \times$$

$$1/[1 + 12[(1/d_s)\{(d_2\mu_s/\cos\alpha) + (P/\pi)\}]^2]^{1/2} \qquad (5)$$

wherein, $d_s = d_2 + d_3$ and $d_3$ is a root diameter.

As indicated by the formula (5), as $\mu_s$ becomes smaller, a critical axial force $F_y$ increases.

When an axial force F attains the critical axial force $F_y$, a critical thread face torque $T_{sy}$ is represented by a formula (6) from the formula (1) and formula (5).

$$T_{sy} = (d_2 F_y/2) \{(\mu_s/\cos\alpha) + (P/\pi d_2)\} \qquad (6)$$

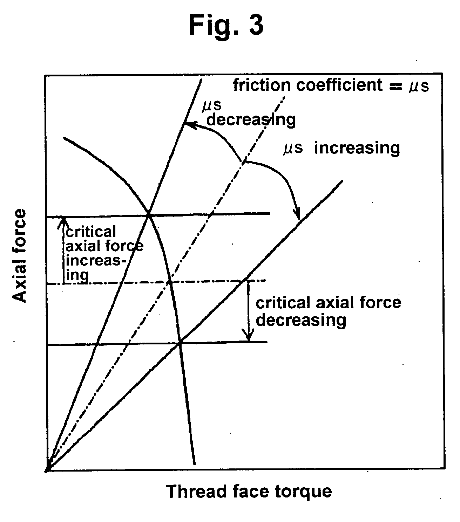

Fig. 3 shows the relationship among a critical axial force $F_y$, a thread face friction coefficient $\mu_s$, and a critical thread face torque $T_{sy}$, which are found in the above manner.

As shown in Fig. 3, when a thread face friction coefficient $\mu_s$ is small, a critical axial force $F_y$ increases but a critical thread face torque $T_{sy}$ decreases. In contrast, when a thread face friction coefficient $\mu_s$ is large, a critical axial force $F_y$ decreases but a critical thread face torque $T_{sy}$ increases.

Meanwhile, a bearing surface torque $T_w$ is represented by the formula (2) as described above. That is, a bearing surface torque $T_w$ can be represented as a function of an axial force F and $\mu_w$. When an axial force F attains a critical axial force $F_y$, a critical bearing surface toque $T_{wy}$ is represented by a formula (7) on the basis of the formula (2).

$$T_{wy} = F_y d_w \mu_w/2 \qquad (7)$$

In the formula (7), an examination will be made of the case where a bearing surface friction coefficient $\mu_w$ is constant and only a thread face friction coefficient $\mu_s$ is small. Since a critical axial force $F_y$ is a function of a thread face friction coefficient $\mu_s$ as indicated by the formula (5), it increases when a thread face friction coefficient $\mu_s$ is small. Therefore, when a thread face friction coefficient $\mu_s$ is small, a critical bearing surface toque $T_{wy}$ also increases from the formula (7).

When a thread face friction coefficient $\mu_s$ is small, an increase in a critical bearing surface toque $T_{wy}$ versus a change in a critical axial force $F_y$ exceeds a decrease in a critical thread face torque $T_{sy}$. Since a critical clamping force $T_y$ is represented by ($T_y = T_{sy} + T_{wy}$), a thread face friction coefficient $\mu_s$ is made small to thereby enable making a critical clamping force $T_y$ larger than that of conventional bolts.

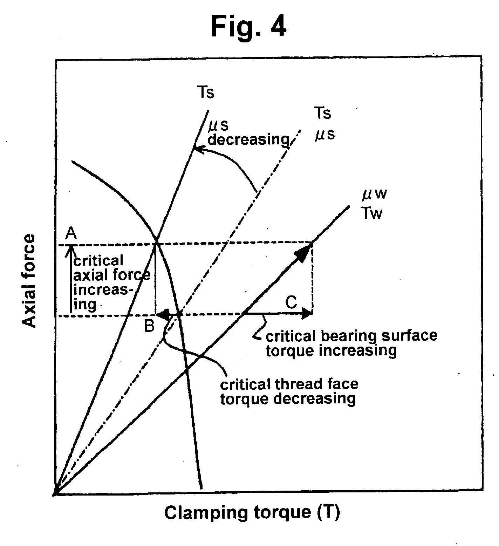

The above-mentioned relationship will be described with reference to Fig. 4.

When only a thread face friction coefficient $\mu_s$ decreases, a critical axial force $F_y$ increases as shown by an arrow A in Fig. 4. At this time, a critical thread face torque $T_{sy}$ decreases as shown by an arrow B in Fig. 4 while a critical bearing surface toque $T_{wy}$ increases as shown by an arrow C in Fig. 4. As indicated by a length of the arrow B and that of the arrow C in Fig. 4, an increase in a critical bearing surface toque $T_{wy}$ becomes larger than a decrease in a critical thread face torque $T_{sy}$. Therefore, a critical clamping force $T_y$ (= $T_{sy} + T_{wy}$) increases consequently.

As described above, when a bearing surface friction coefficient $\mu_w$ is not varied but a thread face friction coefficient $\mu_s$ is made small, both a critical axial force $F_y$ and a critical clamping force $T_y$ can be made large.

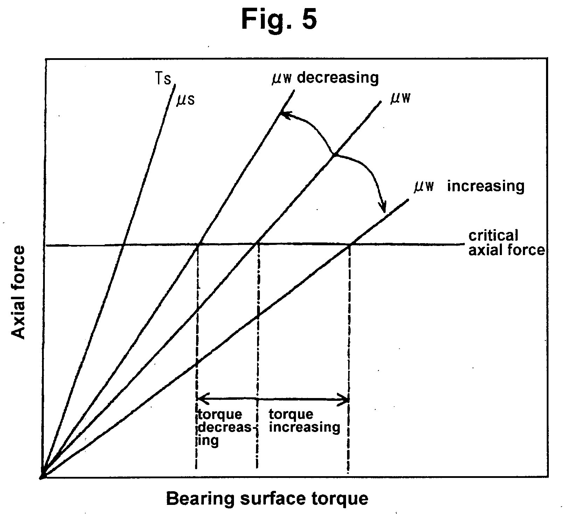

Further, when a thread face friction coefficient $\mu_s$ is made small and a bearing surface friction coefficient $\mu_w$ is made large, a critical clamping force $T_y$ can be further increased. When a bearing surface equivalent diameter $d_w$ is constant and a bearing surface friction coefficient $\mu_w$ is made large, a critical bearing surface toque $T_{wy}$ can be made large as shown in Fig. 5.

As described above, since only a critical bearing surface toque $T_{wy}$ is made small, a critical axial force $F_y$ as well as a critical clamping force $T_y$ can be made large. Further, a bearing surface friction coefficient $\mu_w$ is made large, and then a critical clamping force $T_y$ can be made large further.

A friction coefficient stabilizer is used to adjust magnitudes of a thread face friction coefficient $\mu_s$ and a bearing surface friction coefficient $\mu_w$. The following synthetic resin dispersed in water can be used as a friction coefficient stabilizer applicable in the invention.

(Friction coefficient stabilizer 1)

Oxidative low molecular polyethylene and synthetic resin emulsion dispersed in water can be used as a friction coefficient stabilizer. For example, a friction coefficient stabilizer consisting of oxidative low molecule of 5% (mass%, the same applies to the following), acrylic resin emulsion of 40%, corrosion inhibitor of 1.5%, coloring agent of 0.3%, and the remainder of water has a friction coefficient of about 0.1.

(Friction coefficient stabilizer 2)

A water-soluble alkyd resin dispersed in water can be used as a friction coefficient stabilizer. For example, a friction coefficient stabilizer consisting of water-soluble alkyd resin of 20%, surfactant of 3%, corrosion inhibitor of 1%, coloring agent of 1%, and the remainder of water has a friction coefficient of about 0.17.

(Friction coefficient stabilizer 3)

A water dispersible urethane resin dispersed in water can be used as a friction coefficient stabilizer. For example, a friction coefficient stabilizer consisting of water dispersible urethane resin of 3%, surfactant of 35%, corrosion inhibitor of 2%, coloring agent of 1%, and the remainder of water has a friction coefficient of about 0.17.

The use of the above-mentioned friction coefficient stabilizer makes it possible to adjust a thread face friction coefficient $\mu_s$ to 0.7 times or less a bearing surface friction coefficient $\mu_w$. More specifically, the above-mentioned friction coefficient stabilizer is applied on a thread face to decrease the value of the thread face friction coefficient $\mu_s$. On the other hand, any lubricating treatment is not performed on a bearing surface and the value of the bearing surface friction coefficient $\mu_w$ is not varied, or a friction coefficient stabilizer capable of increasing a friction coefficient is applied on a bearing surface. With such treatment, a thread face friction coefficient $\mu_s$ can be made 0.7 times or less a bearing surface friction coefficient $\mu_w$. In addition, it is preferable to make the value of a thread face friction coefficient $\mu_s$ 0.7 times or less the value of a bearing surface friction coefficient $\mu_w$. Further, in order to exhibit an effect, the value of a thread face friction coefficient $\mu_s$ is preferably made 0.5 times or less the value of a bearing surface friction coefficient $\mu_w$.

Examples

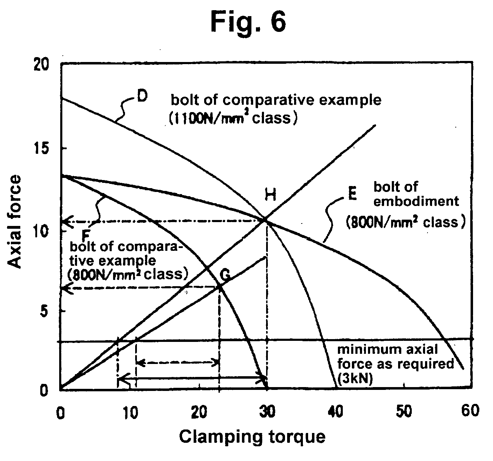

A test was conducted using a M6 bolt having tensile strength of 800 N/mm$^2$ class. The bolt had a bearing surfaces galvanized, and had the above-mentioned friction coefficient stabilizer 1 applied on a thread face. In addition, the above-mentioned parameters had such values as $d_2$: 5.35 mm, $d_3$: 5.06 mm, $d_w$: 10.7 mm, $\mu_s$: 0.1, $\mu_w$: 0.4, $\alpha$: 30 degrees, P: 1.0 mm, and $\sigma_y$: 686 N/mm$^2$. Also, a bolt, of which a thread face friction coefficient $\mu_s$ and a bearing surface friction coefficient $\mu_w$ were 0.4, was used as a comparative example. A test was conducted using these bolts to clamp parts being clamped. As a result, equivalent stress curves thus obtained are shown in Fig. 6.

An equivalent stress curve of a bolt, as a comparative example, having the strength of 800 N/mm$^2$ class is indicated by a curve F shown in Fig. 6. As described above, $\mu_s = \mu_w = 0.4$, the value of a critical axial force $F_y$ being about 7 kN as indicated by a point G in the figure, and the value of a critical clamping force $T_y$ being about 23 N·m.

Meanwhile, an equivalent stress curve of a bolt according to the embodiment is indicated by a curve E shown in Fig. 6. As a result of a thread face friction coefficient $\mu_s$ being decreased, the value of a critical axial force $F_y$ became as large as about 11 kN as indicated by a point H in the figure, and the value of a critical clamping force $T_y$ became as large as about 30 N·m. A critical axial force $F_y$ and a critical clamping force $T_y$ could be made large in value by decreasing a thread face friction coefficient $\mu_s$, and thus the bolt according to the embodiment having the strength of 800 N/mm$^2$ class could attain the substantially same critical axial force $F_y$ and critical clamping force $T_y$ as those of a bolt having the strength of 1100 N/mm$^2$ class indicated by an equivalent stress curve D.

Also, the tolerance of a clamping torque T will be examined. Here, the upper limit of a clamping torque T is a critical clamping force $T_y$, and the lower limit thereof is that clamping torque, by which a minimum axial force required for clamping is generated. In addition, a minimum axial force required for clamping is assumed to be 3 kN.

The tolerance of a clamping torque for a conventional bolt as a comparative object was about 11 to 23 N·m as shown in Fig. 6. A difference between an upper limit and a lower limit was about 12 N·m. Meanwhile, the tolerance of a clamping torque for a bolt according to the embodiment was about 8 to 30 N·m. A difference between an upper limit and a lower limit for the bolt according to the embodiment was about 22 N·m, which was as large as about two times that for the bolt as a comparative object. Accordingly, even in the case of performing a clamping work using a tool of low clamping accuracy, clamping can be achieved by making a clamping torque within the above-mentioned tolerance.

In the above-mentioned example, a thread face friction coefficient $\mu_s$ of the bolt is decreased by applying a friction coefficient stabilizer on a thread face of a bolt. In the case of a nut for clamping, a friction coefficient stabilizer can be applied to a thread face of the nut to decrease a thread face friction coefficient $\mu_s$ of the nut.

The effect of the present invention as mentioned above is summarized in the following table in case of using the bolt and the nut as the threaded fastener.

|     | object having a small friction coefficient of thread face | object applying torque |
| --- | --- | --- |
| (1) | bolt | bolt |
| (2) | bolt | nut |
| (3) | nut | bolt |
| (4) | nut | nut |

In all cases, both the critical axial force and the critical clamping torque can be made large since the friction coefficient of thread face is decrease.

In addition a thread face friction coefficient $\mu_s$ may be decreased by subjecting a thread face of a bolt and a thread face of a nut to polishing treatment to reduce surface roughness of the thread faces. In this case, either a thread face of a bolt or a thread face of a nut may be subjected to polishing treatment or the both thread faces may be subjected to polishing treatment. Such polishing treatment is performed by rubbing an abrasive composed of abrasive grain or the like against the thread face. A thread face friction coefficient $\mu_s$ can be set to a desired value by varying such polishing time or size of abrasive grain.

Further, lubricants such as engine oil or the like may be used as well as the above friction coefficient stabilizers. These lubricants are effective in providing a lubricating effect between a thread face of a bolt and a thread face of a nut and between an object being clamped and a bolt and a nut to enable decreasing the value of a thread face friction coefficient $\mu_s$. These lubricants may be used which are capable of exhibiting a heat-resisting effect, a corrosion resisting effect and so on as well as a lubricating effect in accordance with those circumstances, in which a bolt and a nut are used.

In addition, the above-mentioned friction coefficient can be obtained from the relationship between torque and an axial force by measuring torque and an axial force using a torque-tension measuring machine.

With a threaded fastener according to the invention, a thread face friction coefficient is made small to a bearing surface friction coefficient to thereby enable increasing a critical axial force $F_y$ and also a critical clamping force $T_y$. Thereby, the threaded fastener is hard to loosen and capable of adequately making use of the strength of a bolt to clamp the bolt to members being clamped, and the number of bolts required for clamping can be reduced and and an increase in cost can be suppressed.

## Claims

1.  A threaded fastener comprising a bearing surface and a thread face, wherein a friction coefficient of the thread face is made smaller than that of the bearing surface.

2.  The threaded fastener according to Claim 1, wherein the friction coefficient of the thread face is made 0.7 times or less the friction coefficient of the bearing surface.

3.  The threaded fastener according to Claim 1 or 2, wherein the friction coefficient of the thread face is decreased by the use of a friction coefficient stabilizer.

4.  The threaded fastener according to Claim 1 or 2, wherein the friction coefficient of the thread face is decreased by the use of a lubricant.

5.  The threaded fastener according to Claim 1 or 2, wherein the friction coefficient is decreased by subjecting the thread face to polishing treatment.

6. A method of clamping members by means of a threaded fastener comprising a bearing surface and a thread face, wherein a friction coefficient of the thread face is made smaller than that of the bearing surface at the time of clamping.

# Fig. 1

(a)

(b)

(c)

# Fig. 2

# Fig. 3

friction coefficient = $\mu$s

$\mu$s decreasing

$\mu$s increasing

critical axial force increasing

critical axial force decreasing

Axial force

Thread face torque

# Fig. 4

Ts

Ts
$\mu$s

$\mu$s
decreasing

$\mu$w
Tw

Axial force

A

critical
axial force
increas-
ing

B

C

critical bearing surface
torque increasing

critical thread face
torque decreasing

Clamping torque (T)

# Fig. 5

# Fig. 6

**European Patent Office**

**EUROPEAN SEARCH REPORT**

Application Number

EP 02 00 9450

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 050 765 A (MCGOVERN HUBERT T ET AL) 18 April 2000 (2000-04-18) | 1,3,4,6 | F16B33/06 |
| Y | * the whole document * | 5 | |
| X | US 5 407 312 A (TERRIZZI A SCOTT) 18 April 1995 (1995-04-18) | 1,3,4,6 | |
| Y | * the whole document * | 5 | |
| Y | WO 96 14514 A (FAESTSYSTEM I KARLSKOGA AKTIEB ;WESTLUND TONNY (SE)) 17 May 1996 (1996-05-17) * page 5 – page 6 * | 5 | |
| X | US 5 927 918 A (BURGER ROBERT J) 27 July 1999 (1999-07-27) * abstract * | 1,3,4,6 | |
| X | US 5 221 170 A (DUFFY RICHARD J ET AL) 22 June 1993 (1993-06-22) * column 19, line 25 – line 43; figure 24 * | 1,3,4,6 | |

TECHNICAL FIELDS SEARCHED (Int.Cl.7)

F16B

The present search report has been drawn up for all claims

| Place of search | Date of completion of the search | Examiner |
|---|---|---|
| MUNICH | 1 August 2002 | Comel, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 253 334 A1

**ANNEX TO THE EUROPEAN SEARCH REPORT
ON EUROPEAN PATENT APPLICATION NO.**                  EP 02 00 9450

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2002

| Patent document cited in search report | | Publication date | Patent family member(s) | | Publication date |
|---|---|---|---|---|---|
| US 6050765 | A | 18-04-2000 | NONE | | |
| US 5407312 | A | 18-04-1995 | US | 5452977 A | 26-09-1995 |
| WO 9614514 | A | 17-05-1996 | AU | 3861595 A | 31-05-1996 |
| | | | SE | 9403773 A | 03-05-1996 |
| | | | WO | 9614514 A1 | 17-05-1996 |
| US 5927918 | A | 27-07-1999 | NONE | | |
| US 5221170 | A | 22-06-1993 | US | 4775555 A | 04-10-1988 |
| | | | US | 4835819 A | 06-06-1989 |
| | | | AU | 644655 B2 | 16-12-1993 |
| | | | AU | 7807891 A | 05-09-1991 |
| | | | AU | 614937 B2 | 19-09-1991 |
| | | | AU | 7841187 A | 17-03-1988 |
| | | | BR | 8704772 A | 03-05-1988 |
| | | | CA | 1275600 A1 | 30-10-1990 |
| | | | CA | 1295518 A2 | 11-02-1992 |
| | | | DE | 3751736 D1 | 18-04-1996 |
| | | | DE | 3751736 T2 | 17-10-1996 |
| | | | EP | 0260657 A2 | 23-03-1988 |
| | | | ES | 2083950 T3 | 01-05-1996 |
| | | | JP | 2564566 B2 | 18-12-1996 |
| | | | JP | 63214372 A | 07-09-1988 |
| | | | KR | 9207957 B1 | 19-09-1992 |
| | | | MX | 160073 A | 21-11-1989 |
| | | | US | RE33766 E | 10-12-1991 |

EPO FORM P0459

For more details about this annex : see Official Journal of the European Patent Office, No. 12/82

15